# EUROPEAN PATENT APPLICATION

(11) **EP 4 659 946 A1**
(43) Date of publication of application: **10.12.2025**
(21) Application number: 24180052.3
(22) Date of filing: 04.06.2024
(51) Int. Cl.: B29D 99/00, B29C 33/48, B29C 33/50

(54) **FLEXIBLE TUBE ELEMENT**

(71) Applicant: AIRBUS Operations GmbH, 21129 Hamburg (DE)
(72) Inventor: Jörn, Paul, 21129 Hamburg (DE); Schwickert, Jörg, 21129 Hamburg (DE); Finger, Lennart, 21129 Hamburg (DE); Vichniakov, Alexei, 21129 Hamburg (DE); Haschenburger, Anja, 21680 Stade (DE); Köhler, Filipp, 21129 Hamburg (DE)
(74) Representative: Schicker, Silvia

(57) **Abstract**

The present disclosure relates to a flexible tube element (10) suitable for insertion into a hollow portion enclosed between a first principal surface of a base layer and a protruding part of a closed-profile stringer, wherein the closed-profile stringer has a base part attached to the first principal surface. The flexible tube element comprises a flexible tube core (10c) configured to be expandable to essentially the same shape as the closed-profile stringer; and a reinforcement member (10r) disposed only in an area of the flexible tube element that faces the first principal surface of the base layer.

## Description

### Technical Field

The present disclosure generally relates to a flexible tube element used e.g. for curing or consolidating a thermoforming composite. In particular, the present disclosure relates to composite component manufacturing, such as wings, fuselages or other shell-/box-structures, (co-)curing of thermoset skin e.g. with omega-shaped stringers (wet) on a so-called male mould, and is usable for a fuselage or other shell-like structures, single-curved and double-curved shapes.

### Background

An omega stringer inner pressurization during curing was proposed, using e.g. a male mould. Moreover, co-curing of stringers with so-called "rubber-craft" cores was proposed.

Currently, a semi-rigid core material is used to support the layup process, while the stringer cavities are filled during the curing/consolidation process. Also currently, a constraint/baseline resides in "Lay over the hollow", only tube cores are placed inside of cavity. This leads to problems concerning bridging and undulations of fibres in skin during layup. Other problems reside in that state-of-the-art cores may adhere between stringers and skins, and in insufficient geometrical definition of the cores. This leads to affiliated problems in terms of high cost for exchange of cores after a certain number of cycles, so that there is currently no concept for high-rate manufacturing for composites having thermoforming skins and thermoforming stringers.

Document US 11 701 797 B2 discloses a tubular, single-layered element to be inserted into a stringer with additional plate members facing the protruding part of an omega stringer, but not facing the skin. Said document deems its arrangement advantageous in that the tubular, single-layered element remains its ability to remain collapsible.

Document US 2019 / 0 118 420 A1 shows a stringer that may be deformed in its contact surface to the skin. A reinforcing jig having a square cross-section is embedded into a solid tubular core inserted into the stringer.

Document GB 2 525 243 A mentions an open cell foam core in the general context of aircrafts.

Document CN 111 086 225 A mentions a split core in the general context of aircrafts.

### Summary

Accordingly, there is a need for an implementation of a scheme that avoids one or more of the problems discussed above, or other related problems.

These objects are solved by the present invention as defined by the independent claims. Preferred embodiments are defined by the dependent claims.

Without loss of generality, the present disclosure can be summarized as follows. The target resides in development of a tubular core that can be used also for single and double-curved male co-curing processes supporting the layup of the skin over the stringer. A solution resides in a non-solid material for the tube element which is collapsible after the curing process. As for intended functions, the tube element must keep pressure and geometry during layup, must keep pressure and geometry during curing and must be collapsible and ideally retractable after curing. Moreover, the tube element is to provide a support function in the area of the skin layup, and is to provide functional and good geometrical definition within required tolerances. Concerning its shape, the tube-like element has additional reinforcements in the area towards the skin. Concerning its material, said materials have to be compatible to skin interface (i.e., direct part contact must be allowed); a multi-layered approach is possible: tube must be protected from tear and wear, fatigue, temperature, strength, but keep function; there may be an improved maintenance and re-use concept, e.g. re-use functional layers, e.g. an aramide braid core with inside exchangeable airtight tube, while a single-layer approach is also possible: one material to fit all criteria; there may be indicators for safe-for-use necessary, e.g. colour-change after certain cycles, when fatigued; and the material should be suitable for autoclave processes, presses, hydrostatic metal membrane, oven, with rigid tools, vacuum bagging, but also for thermoset and thermoplastics.

In addition, the present disclosure enables the following advantages:
- Waste avoidance and recurring part cost (RC) reduction due to reusable cores, lower auxiliary materials
- Improved and reproducible laminate/composite quality within required tolerances
- Better cycle times
- Better demoulding capabilities, extraction of cores is possible
- Automation potential

In a first aspect to better understand the present disclosure, there is provided a flexible tube element for insertion into a hollow portion enclosed between a first principal surface of a thermoforming base layer and a protruding part of a closed-profile thermoforming stringer, wherein the closed-profile thermoforming stringer has a base part attached to the first principal surface. The flexible tube element comprises a flexible tube core configured to be expandable to essentially the same shape as the closed-profile thermoforming stringer, and a reinforcement member disposed only in an area of the flexible tube element that faces the first principal surface of the thermoforming base layer.

In a variant, the reinforcement member preferably is configured to withstand layup pressure over the hollow portion so that a minimum layup pressure can be realized while keeping geometrical shape of the thermoforming base layer.

In a first refinement of the first aspect, the reinforcement member preferably comprises at least one plate member. In that case, the reinforcement member preferably comprises two or more plate members. That is, the two or more plate members preferably are mutually bonded by bondings for assembly, wherein the bondings preferably are collapsible above a predetermined temperature.

In a second refinement of the first aspect, the two or more plate members preferably are precured fillers for stabilization during layup.

In a third refinement of the first aspect, the reinforcement member preferably is made of one pre-shaped plate member of a minimum thickness. In that case, the pre-shaped plate member preferably is convexly bent towards the first principal surface. Moreover, the pre-shaped plate member preferably is a bimetallic strip.

In a fourth refinement of the first aspect, the flexible tube element preferably comprises a split core having the flexible tube core as a first member of the split core and the reinforcement member being a further flexible tube core as a second member of the split core. In that case, at least one of the flexible tube core and the reinforcement member preferably is an element that is shaped during pressurization. In turn, at least one of the flexible tube core and the reinforcement member preferably is one of a drop-stitch tube and made of space yarns.

In a variant of the first aspect including all refinements, the flexible tube core preferably is a single-layered flexible tube core. In that case, the flexible tube core preferably is a silicone tube.

Alternatively, in a variant of the first aspect including all refinements, the flexible tube core preferably is a multi-layered flexible tube core having multiple layers. In that case, at least one of the layers preferably is reusable. In turn, the reusable layer preferably is an exchangeable airtight tube disposed inside an aramide braid core. Alternatively, the flexible tube core preferably is an open cell foam core with a tolerance layer and a sealing film on the outside.

In a variant of the first aspect including all refinements and variants, the thermoforming base layer preferably is a composite skin.

In a variant of the first aspect including all refinements and variants, the closed-profile stringer preferably is an omega stringer.

In a second aspect of to better understand the present disclosure, there is provided an aircraft component comprising the flexible tube element of the first aspect and all its variants and refinements.

### Brief Description of the Drawings

The embodiments of the technique presented herein are described herein below with reference to the accompanying drawings, in which:
Fig. 1 shows a general overview of the flexible tube element according to the present disclosure;
Fig. 2A shows a first embodiment of the flexible tube element according to the present disclosure;
Fig. 2B shows a second embodiment of the flexible tube element according to the present disclosure;
Fig. 2C shows a third embodiment of the flexible tube element according to the present disclosure; and
Fig. 2D shows a fourth embodiment of the flexible tube element according to the present disclosure.

### Detailed Description

In the following description, for purposes of explanation and not limitation, specific details are set forth in order to provide a thorough understanding of the technique presented herein. It will be apparent to one skilled in the art that the present technique may be practiced in other embodiments that depart from these specific details.

Moreover, those skilled in the art will appreciate that the services, functions and steps explained herein may be implemented using software functioning in conjunction with a programmed microprocessor, or using an Application Specific Integrated Circuit (ASIC), a Digital Signal Processor (DSP) or general purpose computer. It will also be appreciated that while the following embodiments are described in the context of methods and devices, the technique presented herein may also be embodied in a computer program product as well as in a system comprising a computer processor and a memory coupled to the processor, wherein the memory is encoded with one or more programs that execute the services, functions and steps disclosed herein. This applies especially to the aspect of an automated process for manufacturing/forming the flexible tube element of the present disclosure.

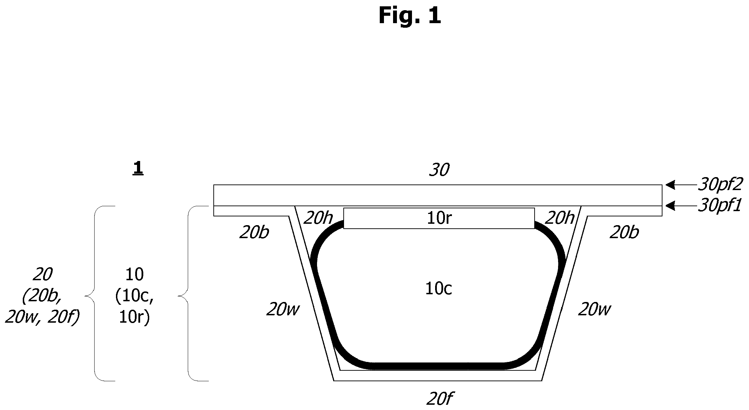

Fig. 1 shows a general overview of the flexible tube element 10 according to the present disclosure. The flexible tube element may be part, at least during layup and curing/consolidation, of a thermoforming composite 1.

In general terms, as shown in Fig. 1, a flexible tube element 10 is provided for insertion into a hollow portion 20h enclosed between a first principal surface 30pf1 of a thermoforming base layer 30 and a protruding part 20w, 20f of a closed-profile thermoforming stringer 20, wherein the closed-profile thermoforming stringer 20 has a base part 20b attached to the first principal surface 30pf1.

Notably, the thermoforming base layer 30 (that may be a composite skin) and the thermoforming stringer 20 may be part of the thermoforming composite 1. The thermoforming base layer 30 may have a second principal surface 30pf2 opposing the first principle surface 30pf1. Moreover, the closed-profile stringer 20 may be an omega stringer 20 having the base part 20b, a web part 20w and a flange part 20f. Moreover, it is noted that the term "thermoforming" is to comprise both meanings "thermoplastic" and "thermoset".

The flexible tube element 10 comprises a flexible tube core 10c configured to be expandable to essentially the same shape as the closed-profile thermoforming stringer 20. Said flexible tube core 10c may be provided with indicators for safe-for-use, e.g. colour-changing after certain cycles when fatigued. Said flexible tube core 10c may also be suitable for autoclave processes, presses, hydrostatic metal membrane, oven, with rigid tools, vacuum bagging, but also for thermoset and thermoplastics.

The flexible tube element 10 further comprises a reinforcement member 10r disposed only in an area of the flexible tube element 10 that faces the first principal surface 30pf1 of the thermoforming base layer 30.

In a first refinement, the reinforcement member 10r is configured to withstand layup pressure over the hollow portion 20h so that a minimum layup pressure can be realized while keeping geometrical shape (of the thermoforming base layer 30).

Moreover, in the first to third embodiments described hereinbelow, the reinforcement member 10r comprises at least one plate member 10r-p1, 10r-p2, 10r-p3; 10r-pp; 10r-pf1, 10r-pf2.

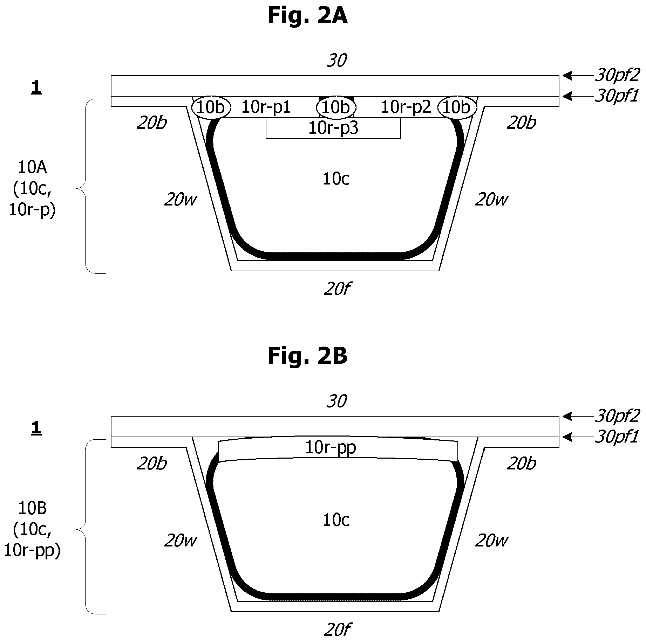

Fig. 2A shows a first embodiment of the flexible tube element 10A according to the present disclosure. In this embodiment, the reinforcement member 10r comprises two or more plate members 10r-p1, 10r-p2, 10r-p3. That is, the reinforcement member 10r may comprise plate-like elements 10r-p1, 10r-p2, 10r-p3 over the stringer cavity/hollow portion 20h.

In this regard, the two or more plate members 10r-p1, 10r-p2, 10r-p3 preferably are mutually bonded by bondings 10b for assembly. In other words, the reinforcement member 10r could consist of at least two parts 10r-p1, 10r-p2, 10r-p3 bonded for assembly. Still further, the bondings 10b preferably are collapsible above a predetermined temperature (e.g. 180 °C).

Fig. 2B shows a second embodiment of the flexible tube element 10B according to the present disclosure. In this embodiment, the reinforcement member 10r is made of one pre-shaped plate member 10r-pp of a minimum thickness. In turn, the pre-shaped plate member 10r-pp preferably is convexly bent towards the first principal surface 30pf1. In other words, the plate member 10r-pp can support the hose/tube element 10 during demoulding to avoid rupture of the hose/tube element 10.

In addition or alternatively, the pre-shaped plate member 10r-pp is a bimetallic strip e.g. used for shape forming; alternatively, also a shape memory alloy may be used.

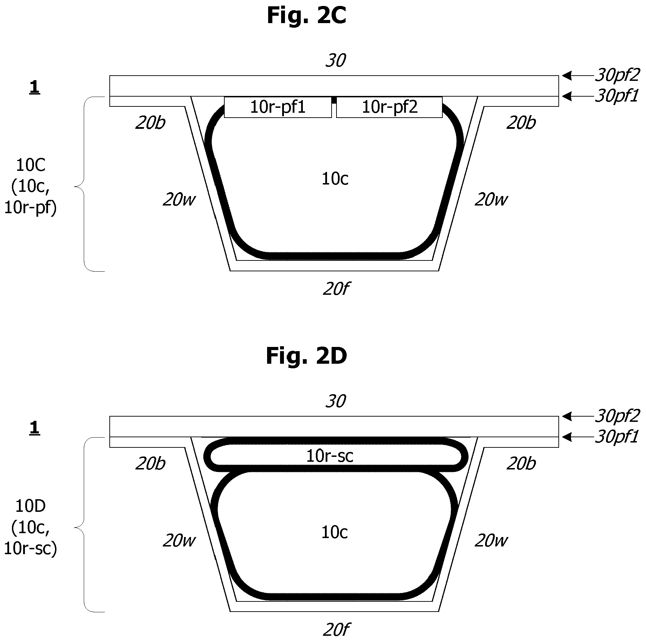

Fig. 2C shows a third embodiment of the flexible tube element 10C according to the present disclosure. Also in this embodiment, the reinforcement member 10r comprises two or more plate members 10r-pf1, 10r-pf2. That is, the reinforcement member 10r may comprise plate-like elements 10r-pf1, 10r-pf2 over the stringer cavity/hollow portion 20h.

That is, the two or more plate members 10r-pf1, 10r-pf2 preferably are precured fillers for stabilization during layup.

Fig. 2D shows a fourth embodiment of the flexible tube element 10D according to the present disclosure. In this embodiment, the flexible tube element 10D comprises a split core 10c, 10r-sc. Said split core 10c, 10r-sc has the flexible tube core 10c as a first member of the split core, and the reinforcement member 10r being a further flexible tube core 10r-sc as a second member of the split core. This arrangement may be pulled out during demoulding.

In this regard, at least one of the flexible tube core 10c and the reinforcement member 10r preferably is an element that is shaped during pressurization. In this case, at least one of the flexible tube core 10c and the reinforcement member 10r preferably is one of a drop-stitch tube and made of space yarns. In the latter case, space yarns means a biasing/spacing fabric that comprises e.g. two cover sheets or an outer hull tube and that is kept, by inner pressure, in a geometrically defined form.

In any of the first to fourth embodiments described above, the flexible tube core 10c preferably is a single-layered flexible tube core. In this case, one material is to fit all of the above-described criteria. Here, the flexible tube core 10c may be a silicone tube, e.g. a fluoroelastomer (such as FKM/FFKM). This implementation may enable so-called netshape stringer runout, meaning a technique where further machining process of the stringer end can be avoided, i.e., the demoulded part (such as the flexible tube core or the composite as a whole) and its edges are already in a desired final geometry.

Alternatively, the flexible tube core 10c preferably is a multi-layered flexible tube core having multiple layers. At least one of the layers preferably is reusable - for instance, the reusable layer preferably is an exchangeable airtight tube disposed inside an aramide braid core, leading to improved maintenance and reusability. Alternatively, the flexible tube core 10c preferably is an open cell foam core with a tolerance layer and a sealing film on the outside - this may be used to stabilize the layup, can be pressurized during curing/consolidation and can be reduced in size by a vacuum.

Notably, an interface at end of the tube element 10 can be geometrically defined, e.g. by rubber solid elements used as connectors, but could also be geometrically undefined.

Finally, the present disclosure also comprises an aircraft component comprising the flexible tube element 10 as described above.

It is believed that the advantages of the technique presented herein will be fully understood from the foregoing description, and it will be apparent that various changes may be made in the form, constructions and arrangement of the exemplary aspects thereof without departing from the scope of the present disclosure or without sacrificing all of its advantageous effects. Because the technique presented herein can be varied in many ways, it will be recognized that the present disclosure should be limited only by the scope of the claims that follow.

## Claims

1. A flexible tube element (10, 10A, 10B, 10C, 10D) for insertion into a hollow portion (20h) enclosed between a first principal surface (30pf1) of a thermoforming base layer (30) and a protruding part (20w, 20f) of a closed-profile thermoforming stringer (20), wherein the closed-profile thermoforming stringer has a base part (20b) attached to the first principal surface, the flexible tube element comprising:
a flexible tube core (10c) configured to be expandable to essentially the same shape as the closed-profile thermoforming stringer; and
a reinforcement member (10r) disposed only in an area of the flexible tube element that faces the first principal surface of the thermoforming base layer.

2. The flexible tube element of claim 1, wherein:
the reinforcement member is configured to withstand layup pressure over the hollow portion so that a minimum layup pressure can be realized while keeping geometrical shape of the thermoforming base layer; and/or
the reinforcement member comprises at least one plate member (10r-p1, 10r-p2, 10r-p3; 10r-pp; 10r-pf1, 10r-pf2).

3. The flexible tube element of claim 2, wherein:
the reinforcement member comprises two or more plate members (10r-p1, 10r-p2, 10r-p3; 10r-pf1, 10r-pf2).

4. The flexible tube element of claim 3, wherein:
the two or more plate members (10r-p1, 10r-p2, 10r-p3) are mutually bonded by bondings (10b) for assembly, wherein
the bondings are collapsible above a predetermined temperature; or
the two or more plate members (10r-pf1, 10r-pf2) are precured fillers for stabilization during layup.

5. The flexible tube element of claim 2, wherein:
the reinforcement member is made of one pre-shaped plate member (10r-pp) of a minimum thickness.

6. The flexible tube element of claim 5, wherein:
the pre-shaped plate member is convexly bent towards the first principal surface; and/or
the pre-shaped plate member is a bimetallic strip.

7. The flexible tube element of claim 1 or 2, wherein:
the flexible tube element comprises a split core (10c, 10r-sc) having:
- the flexible tube core as a first member of the split core, and
- the reinforcement member being a further flexible tube core (10r-sc) as a second member of the split core, at least one of the flexible tube core and the reinforcement member in particular being an element that is shaped during pressurization.

8. The flexible tube element of claim 7, wherein:
at least one of the flexible tube core and the reinforcement member is one of a drop-stitch tube and made of space yarns.

9. The flexible tube element of any one of claims 1 to 8, wherein:
the flexible tube core is a single-layered flexible tube core, the flexible tube core in particular being a silicone tube.

10. The flexible tube element of any one of claims 1 to 8, wherein:
the flexible tube core is a multi-layered flexible tube core having multiple layers, at least one of the layers in particular being reusable.

11. The flexible tube element of claim 10, wherein:
the reusable layer is an exchangeable airtight tube disposed inside an aramide braid core.

12. The flexible tube element of claim 11, wherein:
the flexible tube core is an open cell foam core with a tolerance layer and a sealing film on the outside.

13. The flexible tube element of any one of claims 1 to 12, wherein:
the thermoforming base layer is a composite skin; and/or
the closed-profile stringer is an omega stringer.

14. An aircraft component comprising the flexible tube element of any of claims 1 to 13.

## Amended claims

### Amended claims in accordance with Rule 137(2) EPC.

1. A flexible tube element (10, 10A, 10B, 10C, 10D) inserted into a hollow portion (20h) enclosed between a first principal surface (30pf1) of a thermoplastic or thermoset base layer (30) and a protruding part (20w, 20f) of a closed-profile thermoplastic or thermoset stringer (20), wherein the closed-profile thermoplastic or thermoset stringer has a base part (20b) attached to the first principal surface, the flexible tube element comprising:
a flexible tube core (10c) configured to be expandable to essentially the same shape as the closed-profile thermoplastic or thermoset stringer; and
a reinforcement member (10r),
**characterized in that**:
the reinforcement member is disposed only in an area of the flexible tube element that faces the first principal surface of the thermoplastic or thermoset base layer.

2. The flexible tube element of claim 1, wherein:
the reinforcement member is configured to withstand layup pressure over the hollow portion so that a minimum layup pressure can be realized while keeping geometrical shape of the thermoplastic or thermoset base layer.

3. The flexible tube element of claim 1 or 2, wherein:
the reinforcement member comprises at least one plate member (10r-p1, 10r-p2, 10r-p3; 10r-pp; 10r-pf1, 10r-pf2).

4. The flexible tube element of claim 3, wherein:
the reinforcement member comprises two or more plate members (10r-p1, 10r-p2, 10r-p3; 10r-pf1, 10r-pf2).

5. The flexible tube element of claim 4, wherein:
the two or more plate members (10r-p1, 10r-p2, 10r-p3) are mutually bonded by bondings (10b) for assembly, wherein
the bondings are collapsible above a predetermined temperature; or
the two or more plate members (10r-pf1, 10r-pf2) are precured fillers for stabilization during layup.

6. The flexible tube element of claim 3, wherein:
the reinforcement member is made of one pre-shaped plate member (10r-pp) of a minimum thickness.

7. The flexible tube element of claim 6, wherein:
the pre-shaped plate member is convexly bent towards the first principal surface; and/or
the pre-shaped plate member is a bimetallic strip.

8. The flexible tube element of claim 1 or 2, wherein:
the flexible tube element comprises a split core (10c, 10r-sc) having:
- the flexible tube core as a first member of the split core, and
- the reinforcement member being a further flexible tube core (10r-sc) as a second member of the split core, at least one of the flexible tube core and the reinforcement member in particular being an element that is shaped during pressurization.

9. The flexible tube element of claim 8, wherein:
at least one of the flexible tube core and the reinforcement member is one of a drop-stitch tube and made of space yarns.

10. The flexible tube element of any one of claims 1 to 9, wherein:
the flexible tube core is a single-layered flexible tube core, the flexible tube core in particular being a silicone tube.

11. The flexible tube element of any one of claims 1 to 9, wherein:
the flexible tube core is a multi-layered flexible tube core having multiple layers, at least one of the layers in particular being reusable.

12. The flexible tube element of claim 11, wherein:
the reusable layer is an exchangeable airtight tube disposed inside an aramide braid core.

13. The flexible tube element of claim 12, wherein:
the flexible tube core is an open cell foam core with a tolerance layer and a sealing film on the outside.

14. The flexible tube element of any one of claims 1 to 13, wherein:
the thermoplastic or thermoset base layer is a composite skin; and/or
the closed-profile stringer is an omega stringer.

15. An aircraft component comprising the flexible tube element of any of claims 1 to 14.
